# EUROPEAN PATENT APPLICATION

(11) **EP 2 824 915 A1**
(43) Date of publication of application: **14.01.2015**
(21) Application number: 13758276.3
(22) Date of filing: 27.02.2013
(51) Int. Cl.: H04N 7/173, G06F 13/00, H04H 60/46, H04N 5/765

(54) **DISPLAY SYSTEM, DISPLAY DEVICE, DISPLAY METHOD, AND PROGRAM**

(30) Priority: 08.03.2012 JP 2012052239
(71) Applicant: NEC CASIO Mobile Communications, Ltd., Kawasaki-shi, Kanagawa 211-8666 (JP)
(72) Inventor: ITAMOTO, Shinichi, Kawasaki-shi, Kanagawa 211-8666 (JP); TANAKA, Hideaki, Kawasaki-shi, Kanagawa 211-8666 (JP); TANAI, Sumio, Tokyo 1006620 (JP)
(74) Representative: Vossius & Partner
(86) International application number: PCT/JP2013/055251
(87) International publication number: WO 2013/133109

(57) **Abstract**

A display system includes an acquisition unit that acquires recorded data of a broadcasted content and posted information which is posted on a Web page in association with the content; and a display control unit that controls a display unit to display posting result information which indicates a posting result for the posted information posted in association with the content. It is possible that the display control unit displays, as the posting result information, a posting result for the posted information posted in association with the content, based on posting correspondence relationship information in which temporal information according to a time at which the content was broadcasted is associated with posting timing of the posted information posted for the content.

## Description

### TECHNICAL FIELD

The present invention relates to a display system, a display apparatus, a display method, and a program.

### BACKGROUND ART

Recently, portable terminals such as smartphones, tablet terminals, and the like have been popular. The portable terminals may have a function of receiving airwaves of television broadcasts or a function of accessing the Internet (see, for example, Patent Document 1).

A user of such a portable terminal can browse or watch TV or music contents.

In addition, users post image or text data utilizing a social networking service such as Twitter (registered trademark) or Facebook (registered trademark) so as to share recent events or present ideas on a Web page.

### PRIOR ART DOCUMENT

### Patent Document

Patent Document 1: Japanese Unexamined Patent Application, First Publication No. 2010-273060.

### DISCLOSURE OF INVENTION

### Problem to be Solved by the Invention

However, when a user selects a desired content from among a huge number of previously-broadcasted contents, no guidance for the selection is provided and thus the user cannot easily select the desired content.

In some cases, information about the name of each program or about performers is provided as information utilized to select the content. However, the user who refers to only such information cannot know, for example, whether or not a broadcasted content was popular at the time of broadcasting the content, and thus the user must search for associated information by means of the Internet or the like.

An object of the present invention is to provide a display system, a display apparatus, a display method, and a program, that can solve the above-described problem.

### Means for Solving the Problem

In order to solve the above-described problem, the present invention provides a display system comprising:
an acquisition unit that acquires recorded data of a broadcasted content and posted information which is posted on a Web page in association with the content; and
a display control unit that controls a display unit to display posting result information which indicates a posting result for the posted information posted in association with the content.

The present invention also provides a display apparatus comprising:
an acquisition unit that acquires recorded data of a broadcasted content and posted information which is posted on a Web page in association with the content; and
a display control unit that controls a display unit to display posting result information which indicates a posting result for the posted information posted in association with the content.

The present invention also provides a display method comprising:
totalizing posted results for information posted in association with a broadcasted content; and
displaying posting result information which indicates the totalized posted results.

The present invention also provides a program that makes a computer function as:
an acquisition device that acquires recorded data of a broadcasted content and posted information which is posted on a Web page in association with the content; and
a display control device that controls a display device to display posting result information which indicates a posting result for the posted information posted in association with the content.

### Effect of the Invention

In accordance with the present invention, the user can easily select a desired content from among previously-broadcasted contents.

### BRIEF DESCRIPTION OF THE DRAWINGS

Fig. 1 is a diagram showing an example of the general formation of a display system pertaining to an embodiment of the present invention.
Fig. 2 is a block diagram showing an example of the structure of a display apparatus (portable terminal) pertaining to the embodiment of the present invention.
Fig. 3 is a diagram showing an example of a display screen that is displayed on a display part of the display apparatus (portable terminal) pertaining to the embodiment of the present invention.
Fig. 4 is a diagram showing an example of the structure of a server pertaining to the embodiment of the present invention.
Fig. 5 is a diagram showing an example of the structure of a content broadcast information table pertaining to the embodiment of the present invention.
Fig. 6 is a diagram showing an example of the structure of a user attribute information table pertaining to the embodiment of the present invention.
Fig. 7 is a diagram showing an example of the structure of a posted information table pertaining to the embodiment of the present invention.
Fig. 8 is a diagram showing a display example of posting result information pertaining to the embodiment of the present invention.
Fig. 9A is a diagram showing a display example of analysis result information pertaining to the embodiment of the present invention.
Fig. 9B is also a diagram showing a display example of the analysis result information pertaining to the embodiment of the present invention.
Fig. 10 is a flowchart utilized to explain an example of the registration method of posted information pertaining to the embodiment of the present invention.
Fig. 11 is a flowchart utilized to explain an example of the display method pertaining to the embodiment of the present invention.
Fig. 12 is also a flowchart utilized to explain the example of the display method.
Fig. 13 is a flowchart utilized to explain another example of the display method pertaining to the embodiment of the present invention.
Fig. 14 is a diagram showing a display example of the analysis result information pertaining to the embodiment of the present invention.
Fig. 15 is also a diagram showing a display example of the analysis result information pertaining to the embodiment of the present invention.

### MODE FOR CARRYING OUT THE INVENTION

### First embodiment

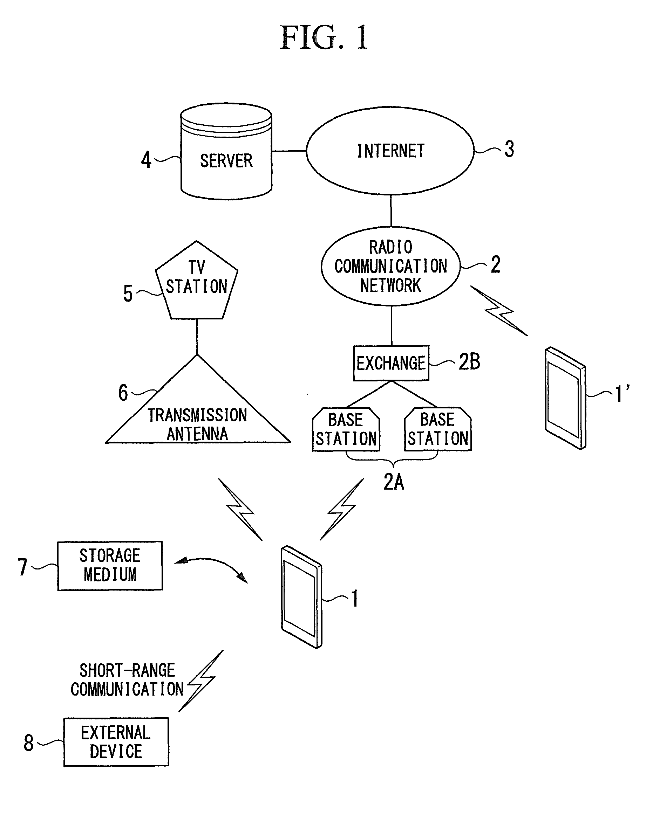

Below, an embodiment of the present invention will be explained in detail with reference to the drawings. Fig. 1 is a diagram showing a general formation of an information processing system pertaining to the embodiment of the present invention.

The present embodiment shows an example in which a portable terminal 1 is employed as an information processing apparatus pertaining to the present invention. Fig. 1 is a general diagram that shows a communication network system that the portable terminal 1 can use.

However, the present invention is not limited to the above formation and the information processing system may be a smartphone, a portable game machine, a PDA (Personal Digital Assistant), a tablet PC (Personal Computer), or a notebook PC.

The portable terminal 1 may have a talking function, an email (or e-mail) communicating function, an Internet connection (or Web accessing) function, a television function by which a digital TV broadcast (e.g., "One Seg" (one-segment digital terrestrial broadcast) can be received and watched), and a recording function. The recording function includes a content storing function to record contents (not only image but also audio: the same shall apply hereafter) received via TV broadcasting or the like.

When the portable terminal 1 is connected to a radio communication network 2 (mobile communication network) via the nearest base station 2A and exchange 2B, the portable terminal 1 is communicable with another portable terminal 1' via the radio communication network 2.

When the portable terminal 1 is connected to the Internet via the radio communication network 2, the portable terminal 1 can access a Web site to browse it.

The portable terminal 1 can also perform streaming that downloads multimedia content data (e.g., video, static images, music, and news) from a server 4 via the Internet 3 and the radio communication network 2 and simultaneously reproduces the data.

In addition, the portable terminal 1 can receive content data of a digital terrestrial broadcast, that is transmitted from a TV station 5 via a transmission antenna 6. The portable terminal 1 can download and receive a digital broadcast program from the server 4 via the radio communication network 2 and the Internet 3, such as Internet radio.

As described above, the portable terminal 1 can (i) receive broadcasted content data by means of the television function and (ii) download and receive content data for streaming by means of the Internet connection function.

The portable terminal 1 can also obtain various contents from a storage medium 7 such as a detachable and portable memory card or obtain various content data from an external device 8 such as another portable terminal 1' via short-range communication such as Bluetooth (registered trademark) or infrared communication.

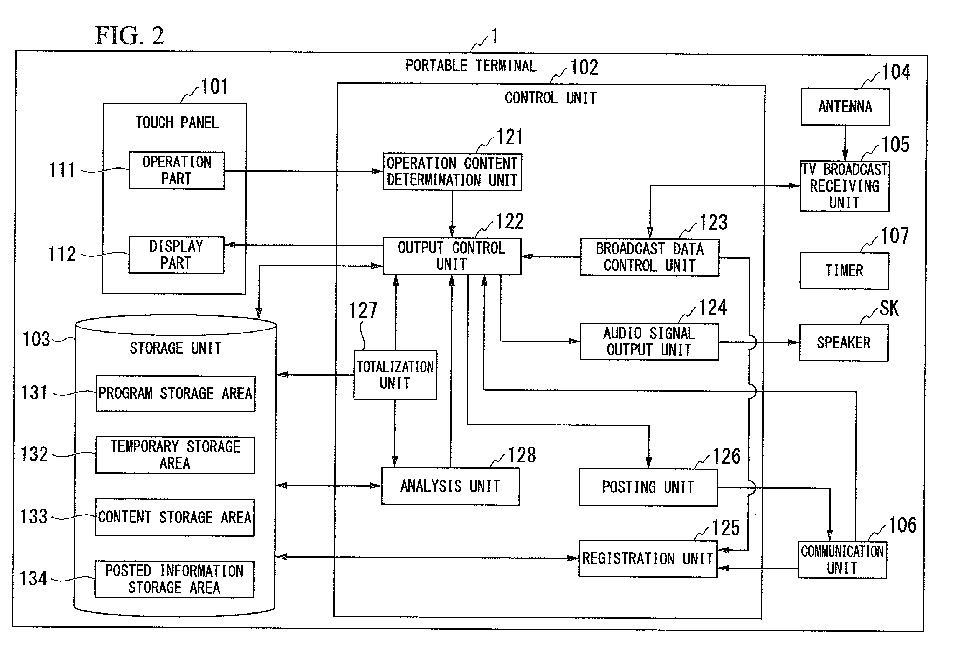

Fig. 2 is a block diagram showing basic structural elements of the portable terminal 1.

The portable terminal 1 has a touch panel 101, a control unit 102, a storage unit 103, an antenna 104, a TV broadcast receiving unit 105, a communication unit 106, a timer 107 and a speaker SK.

The touch panel 101 includes an operation part 111 and a display part 112.

The operation part 111 has a sensor that detects a user's operation. The operation part 111 outputs a result of the detection utilizing the sensor to the control unit 102. In the present embodiment, the operation part 111 utilizes the sensor to detect a contact position of a user's finger that contacts an operation screen at specific time intervals. The operation part 111 outputs a result of the detection utilizing the sensor.

The present invention is not limited to this manner. For example, a non-contact sensor may be utilized to detect a position of a user's finger or an operation designating device that is close to the operation screen.

The display part 112 displays a content according to the control of the control unit 102. In the present embodiment, the display part 112 is integrated with the operation part 111 to form the touch panel 101. The display part 112 displays an operation screen utilized when the operation part 111 accepts a user's operation. In addition, the display part 112 functions as an output unit.

The control unit 102 retrieves various information items stored in the storage unit 103 so as to generally control the portable terminal 1. The control unit 102 includes an operation content determination unit 121, an output control unit 122 (as a display control unit), a broadcast data control unit 123, an audio signal output unit 124, a registration unit 125, a posting unit 126, a totalization unit 127, and an analysis unit 128.

Based on an signal output from the operation part 111, the operation content determination unit 121 performs a determination for the operation content detected by the operation part 111. For example, the operation content determination unit 121 determines a movement of a user's finger based on a contact position and a contact time (period) of the user's finger, which are indicated by the result of the detection utilizing the operation part 111. The operation content determination unit 121 further determines an operation content indicated by the determined movement of the user's finger based on a positional relationship between the determined movement of the user's finger and an image displayed on the display part 112 when the relevant operation was detected.

For example, when the operation part 111 detected an operation of the user's finger that contacts an icon or text part on the display screen, the operation content determination unit 121 determines that the relevant operation is a touch operation. When the operation part 111 detected an operation of the user's finger that moves while an icon part or a predetermined operation area has been selected by the touch operation, the operation content determination unit 121 determines that the relevant operation is a sliding operation.

In addition, the operation content determination unit 121 determines the operation content detected by the operation part 111 based on time information measured by the timer 107.

Additionally, the operation content determination unit 121 may command the output control unit 122 to display a content according to the relevant operation content based on a result of the corresponding determination.

For example, if the operation content is determined to be the touch operation, the operation content determination unit 121 controls the output control unit 122 to display an icon image, that indicates the contact position of the user's finger, overlapped on the operation screen. In the present embodiment, the operation content determination unit 121 may display a finger icon, that indicates the contact position, at a part contacted by the finger.

Based on the operation content indicated by a result of the determination performed by the operation content determination unit 121, the output control unit 122 executes a control to display an image on the display part 112 or a control to output sound from the speaker SK. In the present embodiment, the output control unit 122 executes a content image display process to display a content on a content screen of the display part 112 based on content data and a posting image display process to display information pertaining to posted information (posted on a Web page) on a posting screen of the display part 112.

The information pertaining to posted information includes (i) posted information itself, (ii) posting result information that indicates a result of posting about information posted during a time period of the broadcast of the relevant content, and (iii) analyzed result information that indicates a posting status for the information posted during the time period of the broadcast of the content.

In accordance with a setup condition designated by the user, the output control unit 122 can switch a display mode between a simultaneous display mode in which the content display screen and the posting screen are displayed side by side as a single screen and a single display mode in which any one of the screens is displayed over the whole screen area of the display part 112. Specifically, when the user designates any one of the simultaneous display mode and the single display mode, the output control unit 122 performs switching of the screen displayed on the display part 112 according to the designated mode.

If an operation to designate outputting of a recorded content is input into the operation part 111, the output control unit 122 retrieves designated content data from the storage unit 103 and performs a control to display an image based on the retrieved content data on the display part 112 or to output sound based on the retrieved content data from the speaker SK.

If real-time display of received content data (i.e., real-time mode) has been set, the broadcast data control unit 123 controls, based on digitally modulated content data input from the TV broadcast receiving unit 105, the output control unit 122 to display the content data on the display part 112.

If displaying received content data after storing it in the storage unit 103 (i.e., recording mode) has been set, the broadcast data control unit 123 performs a control to store the digitally modulated content data input from the TV broadcast receiving unit 105 in the storage unit 103.

When the audio signal output unit 124 receives a reception baseband signal demodulated by the output control unit 122, the audio signal output unit 124 makes the speaker SK output sound based on the reception baseband signal.

The registration unit 125 stores in the storage unit 103, information received via the communication unit 106 and content data received from the broadcast data control unit 123.

The posting unit 126 posts the posted information to a Web page.

Based on the posted information received from the server 4, the totalization unit 127 totalizes posted information items which were posted during the broadcast of each content and outputs posting result information that indicates totalized results of posting to the output control unit 122.

Again based on the posted information received from the server 4, the analysis unit 128 analyzes the status of posting. As a result of analysis, the analysis unit 128 outputs analysis result information that indicates a posting status for the posted information items which were posted during the broadcast of the content.

The storage unit 103 stores various information items utilized in processes performed in the portable terminal 1. The storage unit 103 may include a program storage area 131, a temporary storage area 132, a content storage area 133, and a posted information storage area 134.

The storage unit 103 may be formed utilizing a detachable and portable memory (storage medium) such as an SD card or an IC card or may be provided in a specific external server (not shown).

The program storage area 131 is a storage area utilized to store a program and various applications, by which the present embodiment is implemented in accordance with an operation input from the user.

The temporary storage area 132 is a work area to temporarily store various information items by which the portable terminal 1 can operate.

The content storage area 133 is a storage area utilized to store content data of, for example, content data of TV broadcast, which is received by the TV broadcast receiving unit 105. The content storage area 133 may store content data of a broadcast program, recording of which has been programmed, or content data downloaded from a server on a network.

In addition to such content data, the content storage area 133 stores received content IDs and content related information that indicates an attribute of each content. The content ID is individual identification information assigned to each content. The content related information may include the name of a TV station which broadcasts a program corresponding to the relevant content or information that indicates the content of a TV program (e.g., the names of performers or the category name).

The posted information storage area 134 is a storage area to store information pertaining to posting such as information posted on a Web page. Based on information received from the server 4, the posted information storage area 134 stores information in which reproduction position in a content is associated with the timing of posting of information posted during the broadcast of the content.

The antenna 104 receives radio waves having a frequency defined for a TV broadcast and outputs an analog signal of the received radio waves to the TV broadcast receiving unit 105.

The TV broadcast receiving unit 105 implements the TV function by means of the antenna 104. The TV broadcast receiving unit 105 receives content data of a one-segment digital terrestrial broadcast (One Seg) for portable terminals and also receives program information such as an electronic program table (or EPG (Electronic Program Guide)).

The TV broadcast receiving unit 105 has an analog circuit part that extracts broadcast data of a preselected channel from among broadcast data items received by the antenna 104 utilized for TV and a digital circuit part that digitally modulates the broadcast data.

The digital circuit part may (i) subject the received data to OFDM (Orthogonal Frequency-Division Multiplexing) demodulation, (ii) isolate each of video, audio, and data (character data) from multiplexed broadcast data and decode them, and (iii) decompress compressed data.

The communication unit 106 is connected to the radio communication network 2 and the Internet 3 via the base station 2A and the exchange 2B. The communication unit 106 may receive, via the Internet 3, posted information or the like sent from the Internet 3.

The timer 107 measures the present date and time and outputs information about the measured date and time.

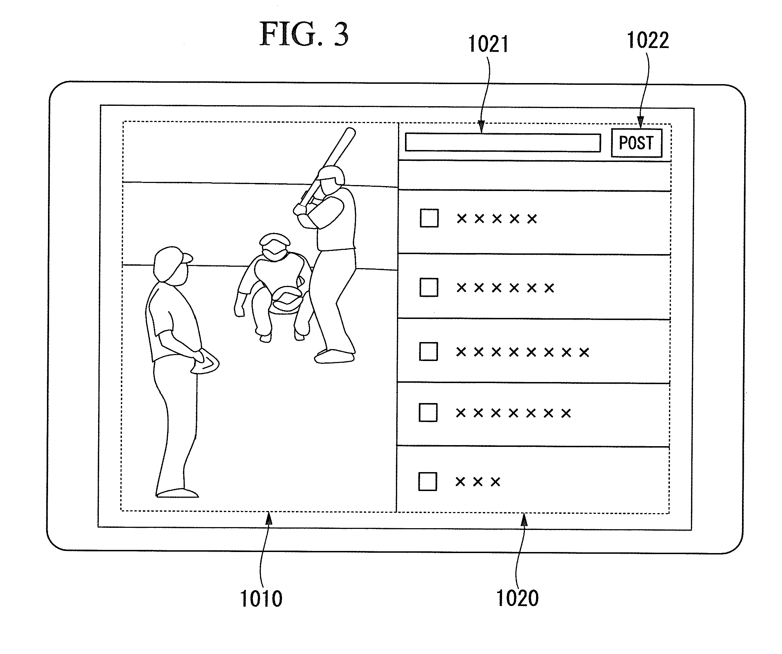

Next, referring to Fig. 3, an example of a screen displayed on the display part 112 of the touch panel 101. Specifically, Fig. 3 is a diagram showing an example of the screen that simultaneously shows a content display area 1010 for displaying a content display screen and a posted information display area 1020 for displaying a posting screen.

As shown in Fig. 3, the entire area of the display part 112 may be divided into halves, where the content display screen is displayed on one (i.e., content display area 1010) of them and the posting screen is displayed on the other (i.e., posted information display area 1020).

In this example of Fig. 3, a live program of a baseball game is displayed in the content display area 1010 and posted information pertaining to the live baseball game is displayed in the posted information display area 1020. Here, contents obtained by the service of Twitter (registered trademark) are displayed in the posted information display area 1020.

As shown in the figure, a plurality of posted information items are displayed sequentially, which are arranged in a time series manner according to each posting time.

In the posted information display area 1020, in input field 1021 into which information to be posted is input and a posting button 1022 are displayed. The input field 1021 and the posting button 1022 each function as an operation screen area in which a touch or sliding operation is detected.

When the input field 1021 is designated by the touch operation, the operation content determination unit 121 determines that an operation that designates the start of input of information to be posted is accepted. When the posting button 1022 is designated by the touch operation, the operation content determination unit 121 determines that an operation that posts the information input into the input field to Twitter (registered trademark) is accepted.

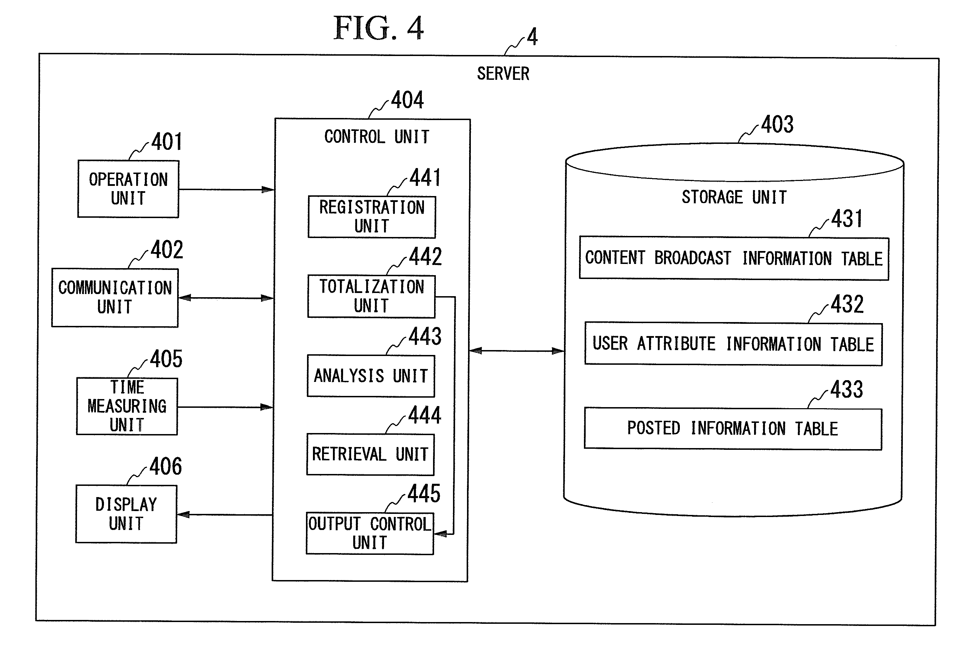

Next, referring to Fig. 4, the server 4 is explained. Fig. 4 is a diagram showing an example of the structure of the server 4.

As shown in Fig. 4, the server 4 has an operation unit 401, a communication unit 402, a storage unit 403, a control unit 404, a time measuring unit 405, and a display unit 406.

The operation unit 401 detects an operation of a manager of the server and outputs an operation signal that indicates the detected operation.

The communication unit 402 performs information communication with the portable terminal 1 via the Internet 3 and the radio communication network 2.

The storage unit 403 includes a content broadcast information table 431, a user attribute information table 432, and a posted information table 433.

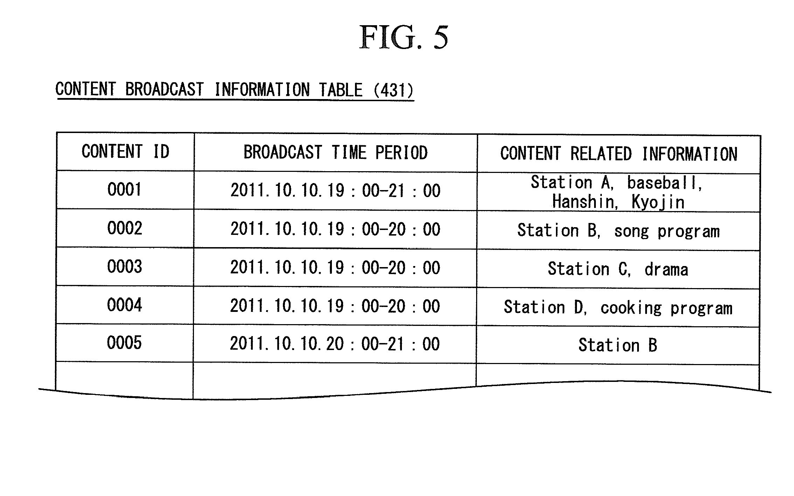

Fig. 5 is a diagram that indicates an example of the content broadcast information table 431.

The content broadcast information table 431 is a table that stores information that indicates each content ID, information that indicates each broadcast time period, and content related information are associated with each other.

Target contents may be video and audio of digitally broadcasted TV programs, sound of a streamed radio program or music. In the following explanation of the present embodiment, the contents are video and audio of digitally broadcasted TV programs.

The broadcast time period is a predetermined time period during which a target content is broadcasted or delivered. The content related information is information predetermined as that related to the target content.

When the contents are video and audio of TV programs, the content related information includes names of a program, a broadcast station, and a performer, a category name of a program, information that is related to the content of each program, and the like. The content related information may be information predetermined by a broadcast station that broadcasts the relevant TV program or a production studio for the program and may be determined by the manager of the server 4.

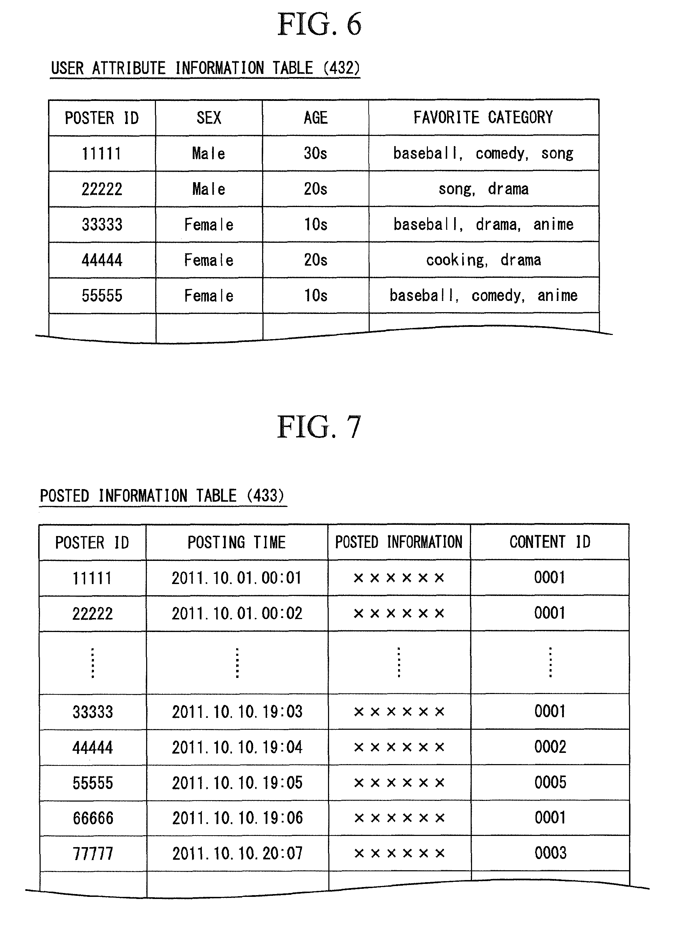

Fig. 6 is a diagram that indicates an example of the user attribute information table 432.

The user attribute information table 432 is a table that stores that stores information that indicates each poster ID and information items about sex, age, and favorite category of each poster are associated with each other.

In the present embodiment, the poster ID is an individual terminal ID allocated to each portable terminal 1 that sends information to be posted. When the user of each poster ID signs up with a posting service, the user may register attribute information (e.g., sex and age) of the poster with the service. In this table, such registered information is associated with the poster ID.

Fig. 7 is a diagram that indicates an example of the posted information table 433.

The posted information table 433 is a table that stores that stores the information that indicates the poster ID, information that indicates posting timing (posting time), posted information, and information that indicates the content ID of the content corresponding to the posted information are associated with each other.

The poster ID is individual identification information utilized to identify the poster. In the present embodiment, the poster ID is the individual terminal ID allocated to each portable terminal 1 that sends information to be posted.

The posting timing is the date and time when the posted information was received from the portable terminal 1.

The posted information is information that indicates posted content transmitted from the portable terminal 1 to the server 4.

As described above, the storage unit 403 utilizes the content ID to store posting correspondence relationship information in which the broadcast time period of each content (i.e., reproduction position in the content) stored in the content broadcast information table 431 and the posting time (i.e., posting timing of information posted during the broadcast of the content) stored in the posted information table 433 are associated with each other.

The control unit 404 has a registration unit 441, a totalization unit 442, an analysis unit 443, a retrieval unit 444, and an output control unit 445.

The registration unit 441 stores the posted information received from the portable terminal 1 in the posted information table 433 of the storage unit 403.

More specifically, after receiving the posted information from the portable terminal 1 via the communication unit 402, the registration unit 441 obtains date and time information as a posting time that indicates the posting timing at which the posted information was posted, where the date and time information is output from the time measuring unit 405 when the server 4 has received the posted information. The registration unit 441 also obtains the terminal ID of the portable terminal 1 associated with the received posted information, as the poster ID.

The registration unit 441 then associates the received posted information with the posting time and the poster ID (obtained from the posted information) so as to store the associated information items in the posted information table 433.

The totalization unit 442 refers to the content broadcast information table 431 and the posted information table 433 to totalize posted information items which were posted during the broadcast of each content and outputs posting result information that indicates totalized results of posting to the output control unit 445.

Additionally, based on the posted information stored in the storage unit 403, the analysis unit 443 analyzes the status of posting. As the result of analysis, the analysis unit 443 outputs analysis result information that indicates a posting status for the posted information items which were posted during the broadcast of the content.

The retrieval unit 444 refers to the posted information stored in the storage unit 403 and retrieves information corresponding to the designated content ID or broadcast time period.

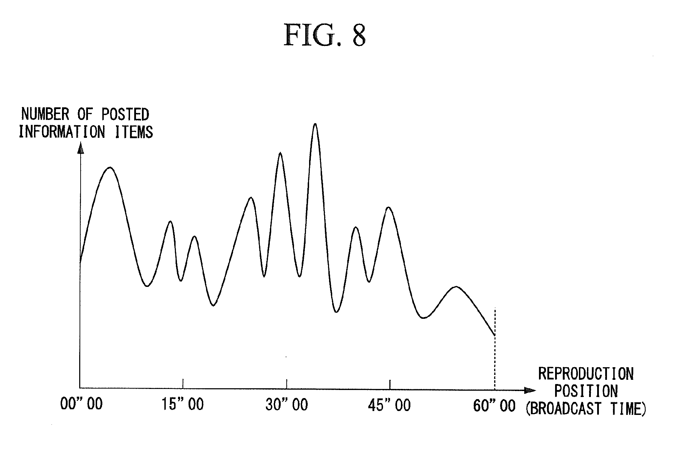

Next, referring to Fig. 8, an example of statistical results displayed on the display part 112 of the portable terminal 1 or the display unit 406 of the server 4 will be explained. Fig. 8 is a diagram showing an example of the posting result information that indicates posting results for the posted information items which were posted during the broadcast time period of each content in the present embodiment.

As shown in Fig. 8, the posting result information is information that indicates a relationship between the reproduction position and the number of posted information items for each content. In the shown example (i.e., graph), the horizontal axis indicates the reproduction position while the vertical axis indicates the number of posted information items.

It is predicted that the posting status along the broadcast time was active at a reproduction position that has a high peak (i.e., a great number of posted information items). That is, when seeing this graph, the user can detect a noticeable part in the relevant broadcasted content in accordance with a variation in the (degree of) activity for the posting status.

Here, the shown posting results indicate the number of posted information items which were posted in association with the relevant content within a time period from the broadcast start position (00" 00) to the broadcast end position (60" 00).

However, the present invention is not limited to the above example and may indicate a relationship between the number of posted information items and the broadcast time for all contents which were broadcasted during a designated broadcast time period. More specifically, a graph may be utilized in which the horizontal axis indicates the broadcast time while the vertical axis indicates the number of posted information items, where the number of posted information items for all contents broadcasted at each broadcast time is plotted along the horizontal axis..

In addition, for each category (e.g., comedy, sport, cooking, beauty, or the like) of the broadcasted contents, a relationship between the content reproduction position and the number of posted information items may be indicated.

Furthermore, a relationship between the number of posted information items and the broadcast time (i.e., reproduction position) may be indicated where the number of posted information items is totalized for each group of posters pertaining to an attribute (e.g., age, sex, taste, or the like) therefor.

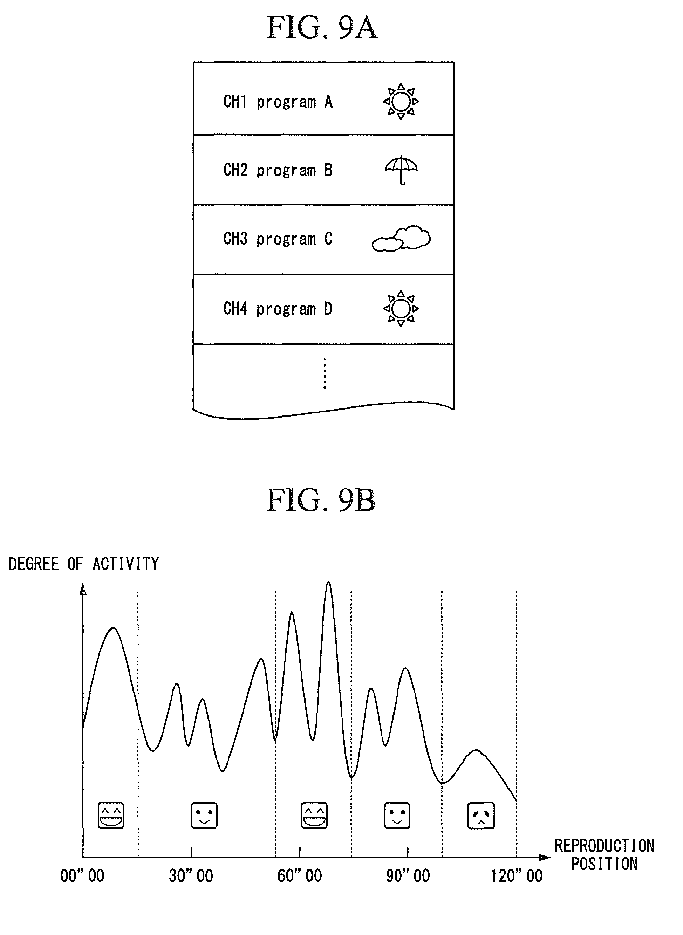

Next, referring to Figs. 9A and 9B, an example of analysis results displayed on the display part 112 of the portable terminal 1 or the display unit 406 of the server 4 will be explained. Figs. 9A and 9B are diagrams that show an example of the analysis result information which indicates the posting status for the posted information items which were posted during the broadcast of the content in the present embodiment.

As shown in Figs. 9A and 9B, the analysis result information is information that indicates (i) a broadcast time period defined based on the time when each content was broadcasted and (ii) a result of analysis performed based on the posting result of the posted information which was posted during the relevant broadcast time period.
Fig. 9A is an example in which the analysis result is shown for each content. Fig. 9B is an example in which the analysis result is shown in accordance with the reproduction position (broadcast time).

In other words, Figs. 9A and 9B shows an example of the analysis result, which is a relative estimation for the posted information items posted during a time period which has a certain width and indicates each reproduction position of the content. Such a time period having a certain width may have a predetermined time length or a time length sectionalized according to an estimated result.

In the example of Fig. 9A, for contents of the individual TV programs that were broadcasted during the same time period, the analysis results are shown utilizing indexes such as a "Sunny" mark, a "Cloudy" mark and a "Rain" mark which represent the degree of activity for the posting status of the posted information. The Sunny mark is an index which indicates that the number of posted information items was generally great and the posting status was active over the broadcast time period. The Cloudy mark is an index which indicates that the number of posted information items was generally less than that of the Sunny mark but greater than that of the Rain mark and thus the (degree of) activity of the posting status has no distinctive feature within the broadcast time period. The Rain mark is an index which indicates that the number of posted information items was generally small and the posting status was not active over the broadcast time period.

The other example shown in Fig. 9B shows the number of posted information items which were posted in association with a designated content during a period from the broadcast start position (00" 00) to the broadcast end position (120" 00) of the content, and also shows the analysis result utilizing indexes such as a "big smile" mark, a "smiley face" mark and a "sad face" mark which represent the degree of activity for the posting status of the posted information. The big smile mark is an index which indicates that the number of posted information items was great and the posting status was active within the broadcast time period. The smiley face mark is an index which indicates that the number of posted information items was generally less than that of the big smile mark but greater than that of the sad face mark and thus the activity of the posting status has no distinctive feature within the broadcast time period. The sad face mark is an index which indicates that the number of posted information items was generally small and the posting status was not active within the broadcast time period.

Here, the relevant analysis result is shown at regular intervals during the broadcast time. That is, Fig. 9 shows an example of displaying the analysis result, that indicates the activity for the posting status in accordance with the number of posted information items within the broadcast time, in association with the broadcast time.

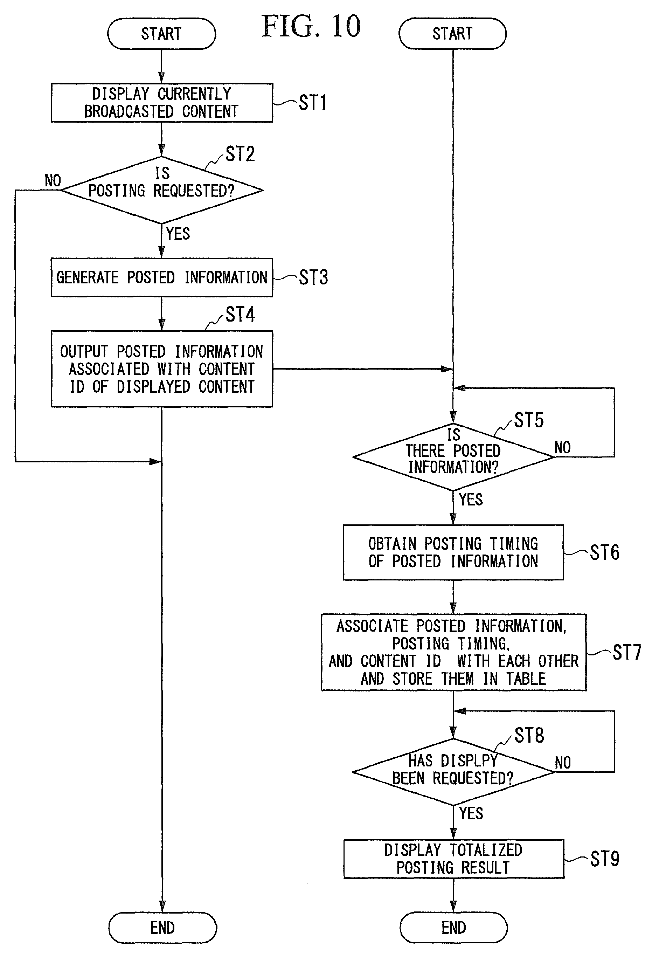

Next, referring to Fig. 10, an example of the registration method of posted information in the present embodiment will be explained. Fig. 10 is a flowchart utilized to explain the example of the registration method of posted information in the present embodiment. In Fig. 10, an operation flow for the portable terminal 1 and an operation flow for the server 4 are explained in parallel.

### Step ST1

If an operation to designate displaying a content of a currently broadcasted TV program on the display part 112 is input via the touch panel 101 from a user, the display part 112 outputs the current content on the display part 112 based on information (digital signal) converted from received broadcast radio waves.

When the current content includes audio and the portable terminal 1 is set to be in a mode that can output sound (e.g., when the mode is not set to a silent mode or the like), the output control unit 122 makes the speaker SK output the audio included in the content.

### Step ST2

The control unit 102 of the portable terminal 1 determines whether or not posting of information to be posted has been designated via the operation part 111.

### Step ST3

Here it is assumed that information to be posted is input from the user via the touch panel 101. More specifically, it is assumed that after the input field 1021 displayed on the display part 112 of the touch panel 101 is designated and information to be posted is input, the posting button 1022 is touched. Accordingly, the operation content determination unit 121 determines that posting of the information input into the input field 1021 has been requested and outputs an operation signal that indicates the determined result to the output control unit 122.

### Step ST4

When accepting the posted information, the output control unit 122 associates the content ID of the content displayed on the display part 112 with the posted information and outputs the associated information to the posting unit 126.

The posting unit 126 sends information via the communication unit 106 to the server 4. That is, the posting unit 126 posts information in which the posted information is associated with the content ID of the displayed content.

If the user is watching a content of a currently broadcasted "CH1 (channel 1) program A", the output control unit 122 generates information in which a content ID of "0001" which indicates this program, posted information, and information which indicates the terminal ID (that indicates the portable terminal 1) are associated with each other and outputs the generated information to the posting unit 126. The posting unit 126 sends received information to the server 4 via the communication unit 106.

### Step ST5

On the other hand, the server 4 determines whether or not posted information is received.

### Step ST6

When the communication unit 402 of the server 4 has received posted information, the registration unit 441 of the control unit 404 obtains information, that indicates the current time measured by the time measuring unit 405, as information which indicates the timing of the posting of the relevant posted information.

As the posting timing, the registration unit 441 may obtain information which indicates a posting date and time "2011.10.10.19:03".

### Step ST7

The registration unit 441 then associates the information which indicates the posting timing with the information received from the portable terminal 1 and stores the associated information in the posted information table 433.

More specifically, the registration unit 441 writes information "11111" which indicates the terminal ID of the portable terminal 1 into a field for the poster ID in the posted information table 433.

The registration unit 441 writes the obtained information "2011.10.10.19:03" which indicates the posting timing into a field for the posting time in the posted information table 433.

Furthermore, the registration unit 441 writes the posted information into a field for the posted information in the posted information table 433.

The registration unit 441 also writes the content ID "0001" which indicates the target program into a field for the content ID in the posted information table 433.

Accordingly, in the storage unit 403, the broadcast time period of the content (i.e., reproduction position in the content) stored in the content broadcast information table 431 (prepared in advance) is associated with the posting time (i.e., posting timing of the information posted during the broadcast of the content) stored in the 433 by means of the content ID, and the posting correspondence relationship information is stored in the storage unit 403.

### Step ST8

The control unit 404 of the server 4 determines whether or not display of the posting result information, that indicates posting results for the posted information items which were posted during the broadcast time period of each content, has been requested by means of the operation unit 401.

### Step ST9

If an operation that commands the display of the posting result information has been input via the operation unit 401, the totalization unit 442 may refer to the content broadcast information table 431 and the posted information table 433 so as to totalize the posted information items which were posted during the broadcast time period of the content. The totalization unit 442 then outputs the posting result information that indicates the totalized posting result to the output control unit 445. The output control unit 445 displays the posting result information that indicates the posting result on the display unit 406.

Here, the totalization unit 442 refers to the content broadcast information table 431 and the posted information table 433 so as to totalize the posted information items which include a tag or a word associated with the content, where the tag is utilized for marking of a keyword or topic in Tweets, which will be explained in detail below. The totalization unit 442 outputs the posting result information that indicates the totalized posting result to the output control unit 445. In this case, the totalization unit 442 totalizes even the posted information items which were posted out of the broadcast time period of the content but include a hashtag or a word associated with the content.

The manner in which the information pertaining to the posted information which was posted during the broadcast of the content may be designated by the user via the operation unit 401 or may be predetermined.

Here, information that indicates a relationship as shown in Fig. 8 between the temporal axis for the broadcast time (reproduction position) of the content and the number of posted information items for the content is output to the display unit 406 as the posting result information that indicates posting results for the posted information items which were posted during the broadcast time period of the content.

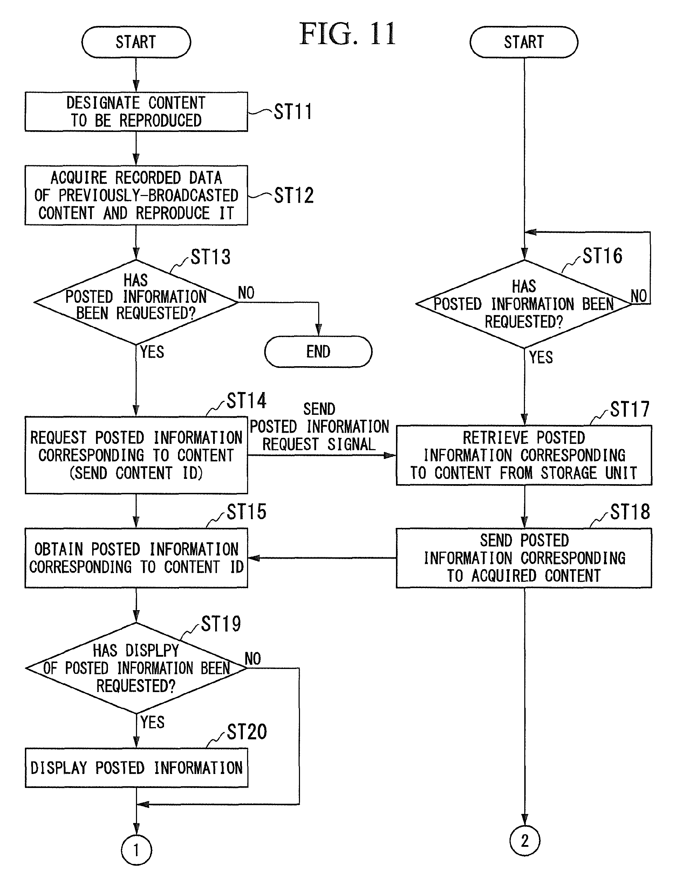

Next, referring to Fig. 11, an example of a display method in the present embodiment will be explained. Fig. 11 is a flowchart utilized to explain the example of the display method in the present embodiment. In Fig. 11, an operation flow for the portable terminal 1 and an operation flow for the server 4 are explained in parallel.

In the flowchart explained below, each process is performed by means of cooperation between the portable terminal 1 and the server 4. However, the present invention is not limited to such a manner. If the portable terminal 1 has at least a required part of the functions of the server 4, the portable terminal 1 may execute all the required functions. In addition, if the server 4 has at least a required part of the functions of the portable terminal 1, the server 4 may execute all the required functions.

### Step ST11

For example, the user designates a content to be reproduced from among recorded contents of previously-broadcasted TV programs. According to this user's operation, the control unit 102 of the portable terminal 1 determines that an operation that commands display of a recorded content of a previously-broadcasted TV program on the display part 112 is input from the user via the touch panel 101.

### Step ST12

The registration unit 125 determines whether or not data of the designated recorded content is stored in the content storage area 133 of the storage unit 103.

If it is stored in the content storage area 133, the output control unit 122 retrieves the data of the designated recorded content and outputs it onto the content display area 1010 of the display part 112.

If no data of the designated recorded content is stored in the content storage area 133 of the storage unit 103, the portable terminal 1 requests a server of the TV station, that stores recorded contents of the previously-broadcasted TV program, to transmit the designated recorded content.

Based on the data of the recorded content received from the server of the TV station, the output control unit 122 outputs the content onto the content display area 1010 of the display part 112.

### Step ST13

The control unit 102 of the portable terminal 1 determines whether or not an operation, that requests posted information associated with the content displayed in the content display area 1010, has been input from the user via the operation part 111.

### Step ST14

If the user has input, via the operation part 111, an operation to request posted information associated with the content displayed in the content display area 1010, the posting unit 126 generates a posted information request signal utilized to request the posted information associated with the content and sends the signal to the server 4 via the communication unit 106.

More specifically, the posting unit 126 generates the posted information request signal that includes the content ID of the content displayed on the content display area 1010.

### Step ST15

When receiving the posted information corresponding to the content ID in the posted information request signal, the portable terminal 1 stores the received posted information in the posted information storage area 134 of the storage unit 103.

### Step ST16

The server 4 determines whether or not the posted information request signal has been received from the portable terminal 1.

### Step ST17

When receiving the posted information request signal from the portable terminal 1, the retrieval unit 444 of the server 4 refers to the posted information table 433 based on the content ID included in the posted information request signal so as to retrieve the poster ID, the posting time, and information that indicates the posted information, which are associated with the content ID.

### Step ST18

The retrieval unit 444 of the server 4 sends the poster ID, the posting time, and the information that indicates the posted information, which were retrieved in association with the content ID, to the portable terminal 1.

### Step ST19

The control unit 102 of the portable terminal 1 determines whether or not display of the posting result information, that indicates posting results for the posted information items which were posted during the broadcast time period of the content, has been requested by means of the operation part 111.

### Step ST20

If an operation that commands the display of the posting result information, that indicates posting results for the posted information items which were posted during the broadcast time period of the content, has been input via the operation part 111, the totalization unit 127 totalizes, based on the information received from the server 4, the posted information items which were posted during the broadcast time period of the content. The totalization unit 127 then outputs the posting result information that indicates the totalized posting result to the output control unit 122. The output control unit 122 displays the posting result information that indicates the posting result on the display part 112.

The manner in which the posting result information that indicates the posting result of the posted information which was posted during the broadcast time period of the content may be designated by the user via the operation part 111 or may be predetermined.

For example, the portable terminal 1 outputs information (totalized result) as shown in Fig. 8, that indicates a relationship between the temporal axis for the broadcast time (reproduction position) of the content and the number of posted information items for the content, as information pertaining to the posted information that was posted for the content.

In another example, the portable terminal 1 outputs information (analysis result) as shown in Fig. 9B, that indicates the posting status for the posted information which was posted during the broadcast time period (reproduction position) of the content, as information pertaining to the posted information that was posted for the content.

The portable terminal 1 may receive the posting result information, that indicates the posting result, from the server 4 and display the received information on the display part 112.

Here, the operation performed by the portable terminal 1 and the server 4 pertaining to the present invention is not limited to one described above, and they may perform the following operation.

For example, in step ST17, when receiving the posted information request signal from the portable terminal 1, the retrieval unit 444 of the server 4 refers to a hashtag or a word associated with the content based on the content ID included in the posted information request signal, so as to retrieve information about each posted information item pertaining to the content having the content ID (from among all posted information items), the poster ID of a poster who posted the relevant posted information, and the posting time therefor. As described above, the retrieval unit 444 of the server 4 also retrieves information that indicates the poster ID, the posting time, and the posted information, which are associated with the content ID.

The retrieval unit 444 of the server 4 then sends the retrieved information about the posted information, the poster ID, and the posting time pertaining to the content, to the portable terminal 1, where the retrieved information includes the information about the poster ID, the posting time, and the posted information, which are associated with the content ID.

Accordingly, regardless of the broadcast time of the content, the portable terminal 1 can output to the display part 112, the posting result information based on the posted information which was posted for the content.

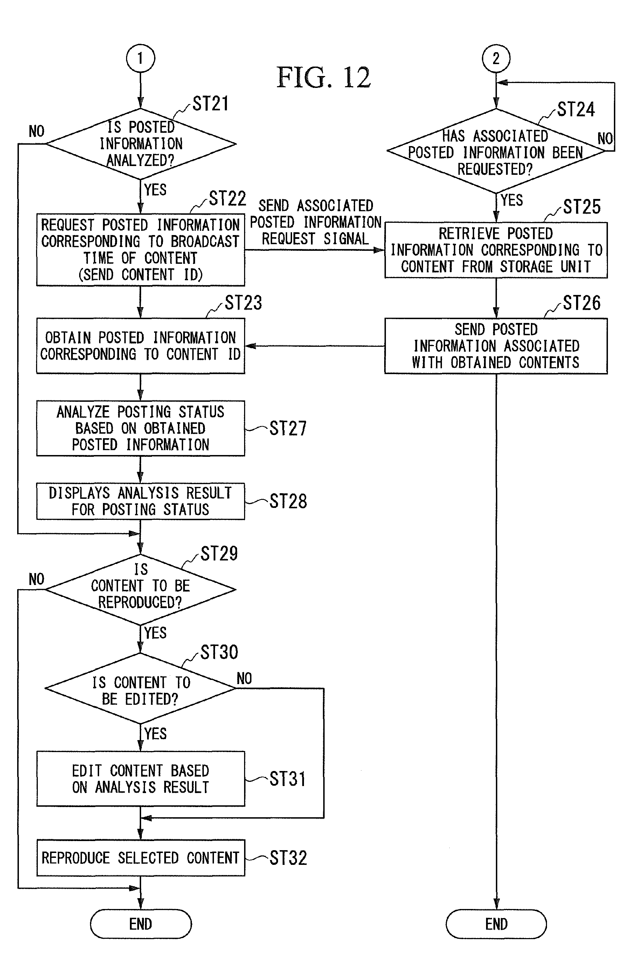

Next, referring to Fig. 12, the next steps of the display method in the present embodiment (shown in Fig. 11) will be explained. Fig. 12 is a flowchart utilized to explain the next steps of the relevant display method in the present embodiment.

### Step ST21

The operation content determination unit 121 of the portable terminal 1 determines whether or not a command to display an analysis result obtained by analyzing the posting status for the posted information pertaining to the content that is displayed in the content display area 1010, has been input by the user.

### Step ST22

If such a command to display the analysis result obtained by analyzing the posting status for the posted information pertaining to the content that is displayed in the content display area 1010, has been input by the user, the posting unit 126 generates an associated posted information request signal utilized to request the posted information corresponding to the broadcast time of the content and sends the signal to the server 4 via the communication unit 106.

More specifically, the posting unit 126 generates the associated posted information request signal that includes the content ID of the content displayed on the content display area 1010.

### Step ST23

When receiving the relevant posted information, the portable terminal 1 stores the received posted information in the posted information storage area 134 of the storage unit 103.

### Step ST24

The server 4 determines whether or not the associated posted information request signal has been received from the portable terminal 1.

### Step ST25

When receiving the associated posted information request signal from the portable terminal 1, the retrieval unit 444 of the server 4 refers to the content broadcast information table 431 based on the content ID included in the posted information request signal so as to obtain other content IDs each of which has a broadcast time period that overlaps with the broadcast time period of the included content ID.

Specifically, in the content broadcast information table 431, the retrieval unit 444 retrieves a broadcast time period "2011. 10. 10. 19:00-21:00" associated with a content ID "0001". Then the retrieval unit 444 obtains other contents IDs "0002", "0003", "0004", and "0005", each of which has a broadcast time period that overlaps with the above broadcast time period "2011. 10. 10. 19:00-21:00".

The retrieval unit 444 then refers to the posted information table 433 to retrieve information that indicates the poster ID, the posting time, and the posted information, which are associated with each of the contents IDs "0002", "0003", "0004", and "0005".

### Step ST26

The retrieval unit 444 of the server 4 then sends the portable terminal 1 the retrieved information that indicates the poster ID, the posting time, and the posted information associated with each of the contents IDs "0002", "0003", "0004", and "0005".

### Step ST27

Based on the posted information and the like stored in the posted information storage area 134 of the storage unit 103 of the portable terminal 1, the analysis unit 128 analyses the posting status.

Here, "the posted information and the like stored in the posted information storage area 134" is the information about the poster ID, the posting time, and the posted information associated with each of the contents IDs "0002", "0003", "0004", and "0005".

For example, the analysis unit 128 divides the broadcast time (i.e., reproduction time) of the recorded content by predetermined unit time and determines, for each unit time, whether or not the number of posted information items is greater than or equal to a predetermined threshold. If it is greater than or equal to the threshold, the analysis unit 128 determines that the posting is active in the relevant unit time and outputs this determination result as an analysis result.

As for the above threshold, thresholds corresponding to different levels may be employed, where the greater the number of posted information items, the higher the degree of activity for the posting status.

The analysis unit 128 also determines whether or not a predetermined positive term is contained in the posted information. The positive term is a pre-registered term which indicates that the posting status is active, for example, "Like", "w", or a face mark (e.g., (^o^)).

As an obtained analysis result, the analysis unit 128 determines that the greater the number of posted information items per unit time for each content, the higher the (degree of) activity for the posting status of the content. In addition, according to the number of posted information items, the analysis unit 128 selects an index which indicates the degree of activity for the posting status and assigns the selected index to each content or each reduction position of the content.

More specifically, if the number of posted information items per unit time is greater than or equal to threshold th1, the analysis unit 128 assigns an index of the "Sunny" or "big smile" mark to the posting status for the relevant unit time.

If the number of posted information items per unit time is less than th1 but greater than or equal to threshold th2 (i.e., th2<th1), the analysis unit 128 assigns an index of the "Cloudy" or "smiley face" mark to the posting status for the relevant unit time.

Furthermore, if the number of posted information items per unit time is less than th2 but greater than or equal to threshold th3 (i.e., th3<th2) (only the former condition of "less than th2" may be defined), the analysis unit 128 assigns an index of the "Rain" or "sad face" mark to the posting status for the relevant unit time.

Accordingly, an analysis result as shown in Fig. 9B is obtained.

The analysis method performed by the analysis unit 128 is not limited to those explained above. Another analysis method, for example, of determining an emotion based on an ordinarily used character string may be employed.

### Step ST28

The output control unit 122 of the portable terminal 1 then displays the analysis result (e.g., a graph as shown in Fig. 9B) obtained by the analysis unit 128 on the display part 112.

### Step ST29

Based on the analysis result, the output control unit 122 of the portable terminal 1 determines whether or not content reproduction is to be performed. For example, if receiving an instruction for the content reproduction from the user who sees the analysis result shown on the display part 112, then output control unit 122 displays a designated content. Accordingly, based on the analysis result, the user can select a desired content to be output.

Also based on the analysis result, the output control unit 122 may display a content which the output control unit 122 determines to be active for the posting status of the posted information. In this case, it is possible to automatically switch the content displayed on the display part 112 in accordance with the posting status.

Additionally, in response to a user's request, the output control unit 122 may select a content having an active posting status based on the attribute of each poster or the broadcast time period of each content, so as to display the selected content on the display part 112. Accordingly, it is possible to output a content having an active posting status by designating the attribute or the like.

### Step ST30

If it is determined that the content reproduction is to be performed, then the output control unit 122 determines whether or not the content to be displayed on the display part 112 is to be edited. For example, when displaying the content on the display part 112 based on the analysis result, if it is predetermined that the reproduced content is edited based on the analysis result, then the output control unit 122 determines that the content is to be edited.

More specifically, the editing is determined when the content editing is preset via the user or initial setting, or when the content to be displayed has a reproduction time greater than a predetermined reproduction time.

### Step ST31

When it is determined that a content to be displayed on the display part 112 based on the analysis result is simultaneously edited, the output control unit 122 edits the content to be displayed on the display part 112 based on the analysis result and outputs the edited content. If the content includes audio data, the output control unit 122 edits the audio data based on the analysis result and performs a control to output the edited data from the speaker SK.

For the content editing, the output control unit 122 selects a part of the edited content (to be displayed on the display part 112) based on the analysis result and displays the selected part on the display part 112.

### Step ST32

If it is determined that a content to be displayed on the display part 112 based on the analysis result is not edited (when displaying the content), then the output control unit 122 retrieves content data (to be output) from the storage unit 103 and displays an image based on the retrieved content data.

If the content includes audio data, the output control unit 122 performs a control to output sound based on the content data from the speaker SK.

As described above, a content according to the analysis result is displayed on the display part 112 so that a content linked to the analysis result can be provided to the user. Therefore, it is possible to easily select a desired content from among previously-broadcasted contents.

Additionally, the content may be edited and displayed on the display part 112 in accordance with the posting status for the posted information. In this case, the user can be provided with digest video consisting of scenes whose posting status is active, digest video in which scenes whose posting status is not active are deleted, or the like. Accordingly, it is possible to easily select a desired content from among previously-broadcasted contents and also to provide major parts of the selected content to the user.

For example, for a content that provides a soccer game, the user can be provided with digest video consisting of goal scenes having an active posting status and chance or pinch scenes having a slightly active posting status.

As for a content that provides Diet proceedings, the analysis unit 128 may extract each scene whose posted information includes critical comments, as a scene having an active posting status, so as to display digest video consisting of the scenes whose posted information includes critical comments.

Additionally, when the selected content is reproduced in step ST32, the corresponding posted information may be displayed in the posted information display area 1020 together with the reproduced content.

For example, associated posted information items may be displayed sequentially along with corresponding reproduction positions of the reproduced content. That is, in line with the individual reproduction positions of the reproduced content, the posted information items which were posted during the broadcast can be displayed. Therefore, the posting status for the posted information at the broadcast of the content can be reproduced.

When the content is edited and, for example, digest video is reproduced, associated posted information may be reproduced sequentially in accordance with each reproduction position of the reproduced content, except for posted information associated with parts (of the content) deleted by the editing. Accordingly, it is possible to edit and display the posted information in the posted information display area 1020 based on the posting status.

The operation of the portable terminal 1 and the server 4 pertaining to the present invention is not limited to one described above, and the portable terminal 1 and the server 4 may perform the following operation.

For example, in step ST25, when receiving the associated posted information request signal from the portable terminal 1, the retrieval unit 444 of the server 4 refers, based on the content ID included in this associated posted information request signal, to a hashtag or a word associated with the content so as to retrieve information about each posted information item pertaining to the content having the content ID (from among all posted information items), the poster ID of a poster who posted the relevant posted information, and the posting time therefor. As described above, the retrieval unit 444 of the server 4 also retrieves information about the poster ID, the posting time, and the posted information, which are associated with the content ID.

The retrieval unit 444 of the server 4 then sends the retrieved information about the posted information, the poster ID, and the posting time pertaining to the content, to the portable terminal 1, where the retrieved information includes the information about the poster ID, the posting time, and the posted information, which are associated with the content ID.

Accordingly, regardless of the broadcast time of the content, the portable terminal 1 can output to the display part 112, the posting result information based on the posted information which was posted for the content. That is, for not only the content displayed in the content display area 1010 but also a content such as a program in a competing timeslot, the posting result information based on the posted information (which was posted for the contents) can be output to the display part 112 regardless of the broadcast time of the contents.

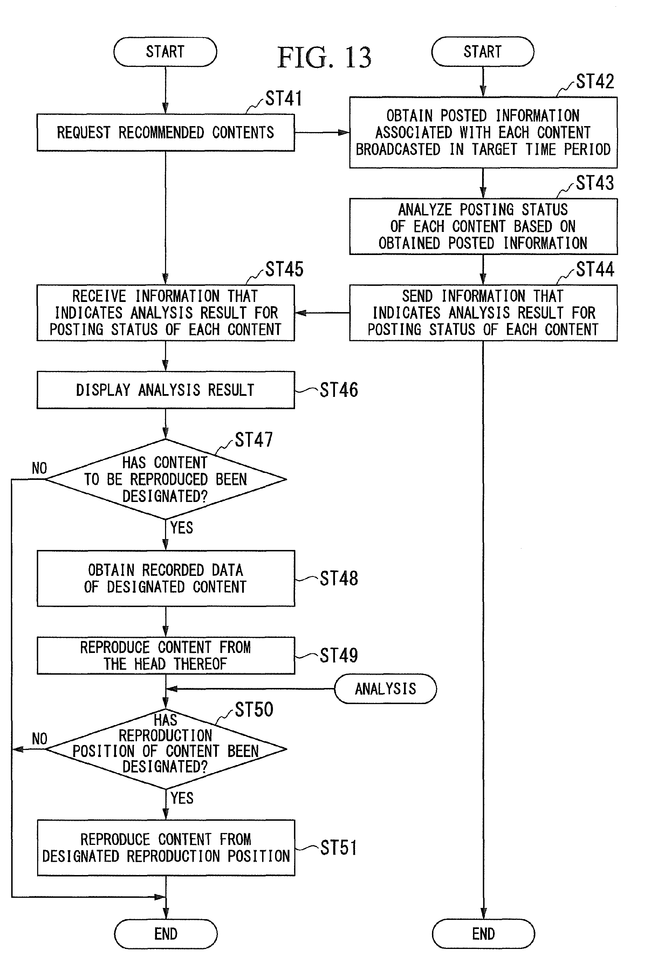

Next, referring to Fig. 13, another example of the display method in the present embodiment will be explained. Fig. 13 is a flowchart utilized to explain the example of the display method in the present embodiment. In Fig. 13, an operation flow for the portable terminal 1 and an operation flow for the server 4 are explained in parallel.

### Step ST41

For example, the user inputs an operation to request "recommended contents" via the operation part 111 of the portable terminal 1. The "recommended contents" are contents having an active posting status for the posted information that was posted at the broadcast of each content, in accordance with a designation by the user for the category (e.g., comedy, sport, cooking, beauty, or the like), the broadcast time, or the TV station of each TV program, or the attribute of each poster. Here, the category or the TV station of the TV program or the attribute of the poster, which is designated by the user, is called a "recommended menu item", below.

The portable terminal 1 generates a recommended content request signal to request the recommended contents having an active posting status for the posted information (posted at the broadcast of each content) in accordance with the recommended menu item designated by the user. The portable terminal 1 sends the signal to the server 4.

### Step ST42

Based on the received recommended content request signal, the server 4 performs analysis for the recommended contents in accordance with the designated recommended menu item.

For example, it is assumed that a broadcast time period "2011. 10. 10. 19:00-21:00" has been designated as the recommended menu item. In this case, the retrieval unit 444 of the server 4 refers to the content broadcast information table 431 to obtain the content ID having a broadcast time that overlaps with the above broadcast time period "2011. 10. 10. 19:00-21:00".

More specifically, the retrieval unit 444 obtains from the content broadcast information table 431, a content ID "0001" associated with the broadcast time period "2011. 10. 10. 19:00-21:00", content IDs "0002", "0003", and "0004" associated with a broadcast time period "2011. 10. 10. 19:00-20:00", and a content ID "0005" associated with a broadcast time period "2011. 10. 10. 20:00-21:00".

The retrieval unit 444 then refers to the posted information table 433 to retrieve information that indicates the poster ID, the posting time, and the posted information, which are associated with each of the contents IDs "0001 ", "0002", "0003", "0004", and "0005".

### Step ST43

Based on the retrieved posted information and the like, the analysis unit 443 of the server 4 analyses the posting status. Here, the retrieved posted information is the information about the poster ID, the posting time, and the posted information associated with each of the contents IDs "0002", "0003", "0004", and "0005".

For example, the analysis unit 443 divides the broadcast time (i.e., reproduction time) of the recorded content by predetermined unit time and determines, for each unit time, whether or not the number of posted information items is greater than or equal to a predetermined threshold. If it is greater than or equal to the threshold, the analysis unit 443 determines that the posting is active in the relevant unit time and outputs this determination result as an analysis result.

As for the above threshold, thresholds corresponding to different levels may be employed, where the greater the number of posted information items, the higher the degree of activity for the posting status.

The analysis unit 443 also determines whether or not a predetermined positive term is contained in the posted information. The positive term is a pre-registered term which indicates that the posting status is active, for example, "Like", "w", or a face mark (e.g., (^o^)).

As an obtained analysis result, the analysis unit 443 determines that the greater the number of posted information items per unit time for each content, the higher the (degree of) activity for the posting status of the content. In addition, according to the number of posted information items, the analysis unit 443 selects an index which indicates the degree of activity for the posting status and assigns the selected index to each content or each reduction position of the content.

More specifically, if the number of posted information items per hour is greater than or equal to threshold th1, the analysis unit 443 assigns an index of the "Sunny" or "big smile" mark to the posting status of each content for the hour.

If the number of posted information items per hour is less than th1 but greater than or equal to threshold th2 (i.e., th2<thl), the analysis unit 443 assigns an index of the "Cloudy" or "smiley face" mark to the posting status of each content for the hour.

Furthermore, if the number of posted information items per hour is less than th2 but greater than or equal to threshold th3 (i.e., th3<th2) (only the former condition of "less than th2" may be defined), the analysis unit 443 assigns an index of the "Rain" or "sad face" mark to the posting status of each content for the hour.

Accordingly, an analysis result as shown in Fig. 9A is obtained.

### Step ST44

The communication unit 402 of the server 4 then sends analysis result information, that indicates an analysis result as shown in Fig. 9A, to the portable terminal 1.

### Step ST45

The communication unit 106 of the portable terminal 1 outputs the received analysis result information to the output control unit 122.

### Step ST46

The output control unit 122 displays the received analysis result (e.g., a diagram as shown in Fig. 9A) on the display part 112. Accordingly, an image as shown in Fig. 9A is displayed in the posted information display area 1020.

### Step ST47

Here, it is assumed in the image as shown in Fig. 9A that a field of "CH1 program A" to which the Sunny mark is appended is touched by the user. Accordingly, the operation content determination unit 121 determines that reproduction of a content for "CH1 program A" has been requested.

### Step ST48

Then the registration unit 125 determines whether or not data of recorded content for the designated "CH1 program A" is stored in the content storage area 133 of the storage unit 130. If it is stored, the output control unit 122 retrieves the data of the recorded content for the designated "CH1 program A" and outputs the relevant content to the content display area 1010 of the output control unit 122.

If no data of the recorded content for the designated "CH1 program A" is stored in the content storage area 133 of the storage unit 130, the portable terminal 1 requests a server of the TV station, that stores recorded contents of the previously-broadcasted TV program, to transmit the recorded content of the designated "CH1 program A". Based on the data of the recorded content of "CH1 program A", which is received from the server of the TV station, the output control unit 122 outputs the relevant content to the content display area 1010 of the display part 112.

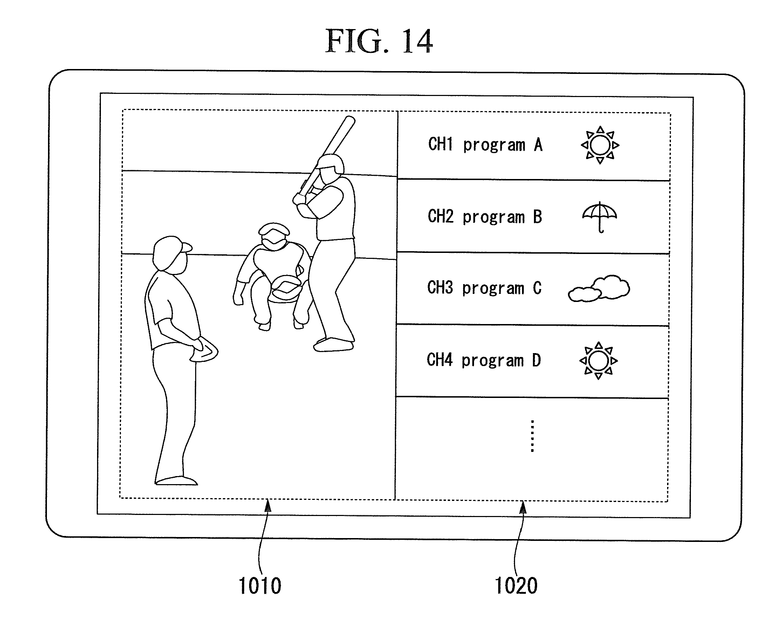

An example of a display screen that is displayed on the display part 112 of the portable terminal 1 is shown in Fig. 14.

### Step ST49

In the above case, the output control unit 122 of the portable terminal 1 reproduces the content of "CH1 program A" from the reproduction start position thereof. Therefore, the display part 112 displays the content from the head thereof.

### Step ST50

Here, it is assumed that a command described in step ST21 of Fig. 12 has been input, that is, a command to display an analysis result obtained by analyzing the posting status for the posted information pertaining to the content "CH1 program A" that is displayed in the content display area 1010, has been input by the user.

In this case, the portable terminal 1 and the server 4 executes the operation from step ST22 to step ST28 so that the output control unit 122 of the portable terminal 1 displays an analysis result (e.g., a graph as shown in Fig. 9B) obtained by the analysis unit 128 on the display part 112.

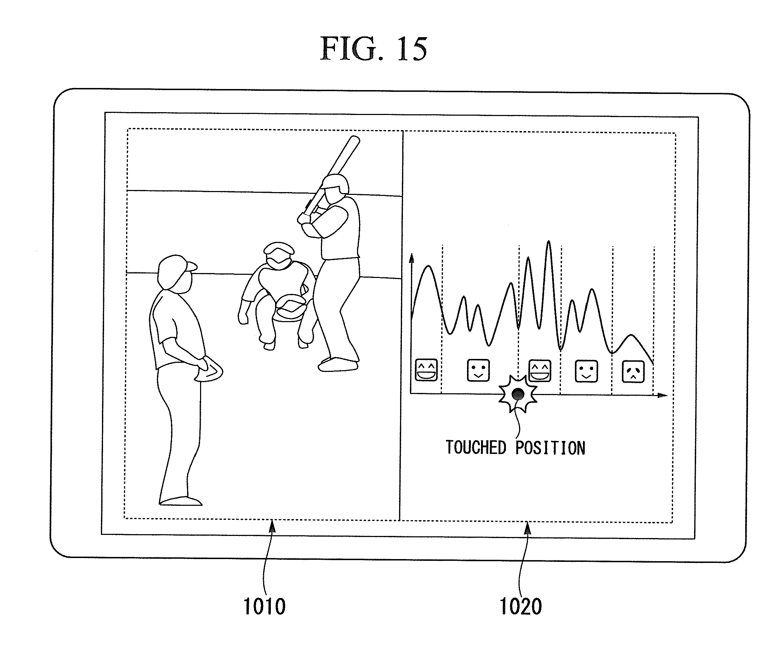

An example of a display screen that is displayed on the display part 112 of the portable terminal 1 is shown in Fig. 15.

Here, it is assumed that a reproduction position for the content has been designated. For example, as shown in Fig. 15, a part corresponding to a reproduction position 55" 00 has been touched. In this case, the operation content determination unit 121 determines that the reproduction position 55" 00 of the content "CH1 program A" is designated as the reproduction position for the content.

### Step ST51

Accordingly, the output control unit 122 of the portable terminal 1 reproduces the content "CH1 program A" from the reproduction position 55" 00. Specifically, the display part 112 displays the content from the reproduction position 55" 00 thereof.

As described above, the display system pertaining to the present embodiment displays posting result information for posted information which was posted during the broadcast time period of a content for target recorded data, based on posting correspondence relationship information in which the reproduction position in the content and the posting timing of the information posted during the broadcast of the content are associated with each other.

Therefore, based on the posting result, the user can determine whether or not the content is to be displayed, by the user's criteria.

In addition, the individual posting result information of each of a plurality of contents can be displayed in correspondence to the content. Therefore, the user can select a desired content (to be displayed) from among the contents by the user's criteria. Accordingly, the user can easily select a desired content from among a huge number of previously-broadcasted contents.

Additionally, when the display system pertaining to the present embodiment displays a recorded content on the display part 112 based on the posting correspondence relationship information, posted information which was posted during the broadcast of the displayed recorded content can be displayed.

Therefore, the posting status at the broadcast of the recorded content can be reproduced.

Accordingly, the user can enjoy watching, not only the recorded content selected based on the posting result, but also the posted information at the broadcast of the content.

Furthermore, the display system pertaining to the present embodiment has an analysis unit that analyses, based on the posting correspondence relationship information, the posting status for the information posted during the broadcast of the relevant content. The analysis result obtained by the analysis unit can be displayed.

Therefore, the user can be provided with the analysis result that indicates the posting status. Accordingly, the user can obtain a disclosed analysis result and select a desired content (to be displayed) from among a plurality of contents by the user's criteria, and thereby the user can easily select a desired content from among a huge number of previously-broadcasted contents.

In addition, the display system pertaining to the present embodiment can (i) obtain, as the analysis result, posting status information that indicates at least one of the number of posted information items per unit time, the attribute of each poster, and the posted content and (ii) display an index, that indicates the activity of the posting status for the posted information, as the analysis result on the display part 112.

Therefore, the analysis result can be shown utilizing an icon or mark (index) understandable by the user. Based on such an icon or mark, the user can know the analysis result and thus can easily select or non-select a content associated with the relevant icon or mark.

The display system pertaining to the present embodiment can also display information in which the analysis result obtained by the analysis unit is associated with the posting result information. For example, as shown in Fig. 9B, face marks for the analysis result are applied to a graph that indicates the posting result.

Accordingly, an analysis result corresponding to each posting result for the posted information can be displayed. In addition, an analysis result in accordance with the reproduction position in the content can be displayed for the user.

In the present invention, the analysis result or timing for obtaining thereof are not limited to those in the above-described embodiment. For example, the analysis unit 443 of the server 4 may compute the analysis result and store it in the storage unit 403 when the broadcast of each content is completed.

Also in the above embodiment, an example of generating the posting correspondence relationship information, in which the content ID is associated with the reproduction position in the content and the posting timing for the information posted during the broadcast of the content, was explained.

However, the present invention is not limited to this example. That is, a hashtag (that may indicate the content, category, broadcast station, performers, or the like for the content) or a word associated with the content may be extracted from the posted information, and posting correspondence relationship information may be generated in which the extracted tag or word is associated with the reproduction position in the content and the posting timing for the information posted during the broadcast of the content.

In addition, the posted information for each content is not limited to information posted during the broadcast time period of the content but also information posted prior to or after the broadcast time period of the content. Such information posted out of the broadcast time period of the content can be obtained by means of a hashtag, an associated keyword, the content ID, or the like.

The above-described hashtag is classification information utilized in Twitter (registered trademark). When posted information that includes a hashtag is posted, posted information that includes the hashtag and posted information that does not include the hashtag can be classified into different categories. Additionally, the hashtag is utilized as a search key when searching for only posted information that includes the hashtag from among a plurality of posted information items.

Such a search utilizing the hashtag as the search key is beneficial when there is a positive intention of users to post the information associated with the hashtag.

For example, although a search utilizing a keyword included in the posted information can search for posted information pertaining to the keyword, a character string that includes this keyword must be posted to perform this search, by which each user may not be able to perform the posting using a voluntary character string. In addition, if posted texts and the relevant keyword are displayed side by side, the keyword may disturb the user's understanding of the posted texts. Therefore, the hashtag is employed as a tool for associating the relevant posted information items with each other without using keywords.

The hashtag is information in which the sharp mark "#" is added to the beginning of a character string which indicates a keyword utilizing the alphabet, Chinese characters, hiragana, katakana, or the like. The hashtag can be freely defined by users except for a condition that the hashtag must be interposed between spaces. Therefore, the character string that functions as a keyword can be freely determined by users and may be produced by a specific user.

Additionally, in the above embodiment, the operation part 111 and the display part 112 are included in the touch panel 101. However, the present invention is not limited to this form. In another example, the display part 112 is a display having no touch sensor, and the operation part 111 is an operation device such as a mouse, a keyboard, or buttons.

Additionally, the posted information includes information posted in a mini-blog, Twitter (registered trademark), or a blog.

The present invention is not limited to the embodiment explained above, and a recorded content according to the analysis result may be automatically displayed on the portable terminal 1.

For example, in the operation flow explained with reference to Fig. 13, when the user inputs an operation to request the "recommended contents" via the operation part 111 of the portable terminal 1, the analysis result received from the server 4 may not be displayed and a content, that is determined to have an active posting status based on the analysis result, may be displayed on the display part 112. In this process, if there are a plurality of contents that are determined to have an active posting status, an optimum content may be selected in accordance with the attribute of each poster.

In this case, the user can be provided with a content in accordance with recent trends or the attribute of each poster.

The present invention is not limited to the above-described embodiment and may display a digest of a recorded content based on the analysis result.

In step ST47 explained with reference to Fig. 13, when a content to be reproduced is designated, a content part (in the content) during each broadcast time period to which the "big smile" mark as shown in Fig. 9B is assigned may be displayed. That is, the portable terminal 1 can display only parts of the recorded content which have an active posting status. In other words, the other parts which are not sufficiently active can be skipped.

The information processing system, the portable terminal 1, and the server 4, which pertain to the present embodiment, each include a computer system. The steps in the relevant operation are stored as a program in a computer-readable storage medium, and the operation is performed when the relevant computer loads and executes the program. The above computer system includes hardware resources such as a CPU, various types of memories, an OS, and peripheral devices.

If the computer system employs a WWW system, the computer system can provide a homepage service (or viewable) environment.

The above computer readable storage medium is a storage device, for example, a portable medium such as a flexible disk, a magneto optical disk, a ROM, a writable and nonvolatile memory (e.g., flash memory), or a CD-ROM, or a memory device such as a hard disk built in a computer system.

The computer readable storage medium also includes a device for temporarily storing the program, such as a volatile storage medium (e.g., DRAM (dynamic random access memory)) in a computer system which functions as a server or client and receives the program via a network (e.g., the Internet) or a communication line (e.g., a telephone line).

The above program, stored in a memory device of a computer system, may be transmitted via a transmission medium or by using transmitted waves passing through a transmission medium to another computer system. The transmission medium for transmitting the program has a function of transmitting data, and is, for example, a (communication) network such as the Internet or a communication line such as a telephone line.

In addition, the program may execute a part of the above-described functions.

The program may also be a "differential file" (differential program) so that the above-described functions can be executed by a combination program of the differential program and an existing program which has already been stored in the relevant computer system.

Priority is claimed on Japanese Patent Application No. 2012-52239, filed March 8, 2012, the contents of which are incorporated herein by reference.

### INDUSTRIAL APPLICABILITY

In accordance with the present invention, the user can easily select a desired content from among previously-broadcasted contents.

### Reference Symbols

- 1: portable terminal
- 2: radio communication network
- 2A: base station
- 2B: exchange
- 3: Internet
- 4: server
- 5: TV station
- 6: transmission antenna
- 7: storage medium
- 8: external device
- 101: touch panel
- 102: control unit
- 103: storage unit
- 104: antenna
- 105: TV broadcast receiving unit
- 106: communication unit
- 107: timer
- 111: operation part
- 112: display part
- 121: operation content determination unit
- 122: output control unit (display control unit)
- 123: broadcast data control unit
- 124: audio signal output unit
- 125: registration unit
- 126: posting unit
- 127: totalization unit
- 128: analysis unit
- 131: program storage area
- 132: temporary storage area
- 133: content storage area
- 134: posted information storage area
- 401: operation unit
- 402: communication unit
- 403: storage unit
- 404: control unit
- 405: time measuring unit
- 406: display unit
- 431: content broadcast information table
- 432: user attribute information table
- 433: posted information table
- 441: registration unit
- 442: totalization unit
- 443: analysis unit
- 444: retrieval unit
- 445: output control unit

## Claims

1. A display system comprising:
an acquisition unit that acquires recorded data of a broadcasted content and posted information which is posted on a Web page in association with the content; and
a display control unit that controls a display unit to display posting result information which indicates a posting result for the posted information posted in association with the content.

2. The display system in accordance with claim 1, wherein:
the display control unit displays, as the posting result information, a posting result for the posted information posted in association with the content, based on posting correspondence relationship information in which temporal information according to a time at which the content was broadcasted is associated with posting timing of the posted information posted for the content.

3. The display system in accordance with claim 1 or 2, wherein:
the display control unit displays, as the posting result information, a posting result for the posted information posted in association with the content, based on classification information utilized for classification of the posted information in accordance with the content.

4. The display system in accordance with any one of claims 1 to 3, wherein:
when outputting the broadcasted content based on the recorded data, the display control unit controls, based on the posting correspondence relationship information, the display unit to display the posted information posted when the content was broadcasted.

5. The display system in accordance with any one of claims 2 to 4, further comprising:
an analysis unit that analyzes, based on the posting correspondence relationship information, a posting status for the posted information posted when the content was broadcasted,
wherein the display control unit controls the display unit to display an analysis result obtained by the analysis unit.

6. The display system in accordance with claim 6, wherein:
based on the analysis result obtained by the analysis unit, the display control unit selects at least a part of the content to be displayed on the display unit and displays the selected part on the display unit.

7. The display system in accordance with claim 5 or 6, wherein:
based on the posted information, the analysis unit obtains posting status information that indicates at least one of the number of posted information items per unit time, an attribute of each poster, and each posted content; and
based on the obtained posting status information, the analysis unit outputs an index, that indicates a degree of activity for the posting status of the posted information, as the analysis result to the display control unit.

8. The display system in accordance with any one of claims 5 to 7, wherein:
the display control unit controls the display unit to display information in which the analysis result obtained by the analysis unit is associated with the posting result information.

9. A display apparatus comprising:
an acquisition unit that acquires recorded data of a broadcasted content and posted information which is posted on a Web page in association with the content; and
a display control unit that controls a display unit to display posting result information which indicates a posting result for the posted information posted in association with the content.

10. A display method comprising:
totalizing posted results for information posted in association with a broadcasted content; and
displaying posting result information which indicates the totalized posted results.

11. A program that makes a computer function as:
an acquisition device that acquires recorded data of a broadcasted content and posted information which is posted on a Web page in association with the content; and
a display control device that controls a display device to display posting result information which indicates a posting result for the posted information posted in association with the content.
